# NOUVEAU FASCICULE DE BREVET EUROPEEN

(11) **EP 1 756 830 B2**
(45) Date de publication et mention de la décision concernant l'opposition: **26.11.2014**
(45) Mention de la délivrance du brevet: 09.01.2008
(21) Numéro de dépôt: 05778877.0
(22) Date de dépôt: 17.06.2005
(51) Int. Cl.: G11B 33/04

(54) **CONDITIONNEMENT POUR DISQUES NUMERIQUES STOCKES EN OBLIQUE**
HÜLLE FÜR SCHRÄG GELAGERTE DIGITALPLATTEN
PACKAGING FOR DIGITAL OBLIQUELY STORED DISCS

(30) Priorité: 17.06.2004 FR 0406588
(43) Date de publication de la demande: 28.02.2007
(73) Titulaire: MPO France, 53700 Averton (FR)
(72) Inventeur: GIRAUD, Charles-Henri, F-72000 Le Mans (FR)
(74) Mandataire: Guerre, Dominique
(86) Numéro de dépôt international: PCT/FR2005/001523
(87) Numéro de publication internationale: WO 2006/005851

(56) Documents cités:
- EP-A- 0 676 763
- EP-A- 1 189 233
- WO-A-95/26917
- WO-A1-03/058627
- GB-A- 2 312 203
- GB-A- 2 336 582
- US-A- 1 303 299
- US-A- 4 676 372
- US-A- 4 815 600
- US-A- 5 333 741
- US-A- 5 570 781
- US-A- 5 611 426
- US-A- 5 638 952
- US-A- 5 676 246
- US-A- 5 713 462
- US-A- 5 791 468
- US-A1- 2004 079 656

## Description

L'invention concerne en général les conditionnements pour disques numériques.

Plus précisément, l'invention concerne un conditionnement pour une pluralité de disques numériques, tels que des CD audio ou des CD Rom ou encore des DVD, comprenant un plateau présentant une grande face dans laquelle est ménagé un logement de réception des disques délimité par un fond.

Des conditionnements de ce type sont connus de l'art antérieur, et notamment du brevet européen EP-B-0676763, qui révèle un conditionnement muni d'un logement dont le fond est divisé en au moins deux zones de niveaux différents, ces deux zones recevant chacune un disque et étant disposées de telle sorte que les disques se recouvrent partiellement.

Ces conditionnements présentent le défaut d'être épais, puisque les disques sont décalés l'un par rapport à l'autre en hauteur pour pouvoir se recouvrir. Ce défaut est particulièrement gênant dans le cas de conditionnements permettant de recevoir 4 ou 6 disques, puisque tous les disques se superposent les uns aux autres en hauteur, l'épaisseur totale du conditionnement correspondant à l'épaisseur cumulée de tous les disques.

Dans ce contexte, la présente invention a pour but de pallier le défaut mentionné ci-dessus, et de proposer un conditionnement permettant un nouveau mode d'agencement des disques dans le logement.

Par ailleurs le document US 5 791 468 décrit un boîtier pour le conditionnement de disques. Pour le stockage, les disques sont glissés dans des pochettes qui se superposent partiellement au fond du boîtier. Les disques se chevauchent partiellement et sont espacés par les pochettes. Les pochettes sont articulées par rapport au fond du boîtier et peuvent être basculées en position plus ou moins oblique.

Le document WO/95126917 décrit également le stockage d'une pluralité de disques dans des pochettes en carton. Chaque disque est glissé dans une pochette individuelle et les disques sont ainsi espacés par l'intermédiaire de la couche en carton de la pochette. Les pochettes sont agencées de telle sorte que les disques se recouvrent partiellement.

Le document GB 2 312 203 décrit un plateau en matière rigide pour le stockage de deux disques. Les disques sont maintenus par des rosaces centrales et sont situés sur des niveaux différents.

Le document GB 2 336 582 décrit un conditionnement pour une pluralité de disques dans lequel les disques sont stockés dans des pochettes de façon à être positionnés en oblique.

Le document EP 1 189 233 décrit un conditionnement pour disques comportant des moyens pour le maintien des disques par leur périphérie. Les disques sont positionnés à plat et ne sont pas positionnés en oblique par rapport au fond.

Le document WO 02/067262 décrit un boitier pour une pluralité de disques numériques stockés en oblique par rapport au fond du boitier.

Le document US 5 611 426 décrit un plateau pour le stockage d'une pluralité de disques. Les disques sont maintenus par des rosaces centrales en position norizontale par rapport au fond du plateau. Les disques sont positionnés sur des niveaux différents, ce qui permet le recouvrement partiel.

Le document US 5 638 952 décrit un boîtier portable de rangement de disques compact et de disquettes.

Un plateau selon l'invention est un plateau, rigide, de forme générale rectangulaire, comprenant des moyens pour maintenir une pluralité de disques numériques dans des positions de stockage respectives, le plateau présentant une face dans laquelle est ménagé un logement de réception des disques, présentant un fond et des bords, lesdits moyens de maintien étant agencés pour maintenir en position oblique, de manière amovible, chaque disque, et comportent une patte de soutien ménagée sur un dit bord, agencée pour soutenir chaque dit disque en position oblique, et comprenant une partie saillante s'étendant vers l'intérieur du logement, dont la taille est choisie pour que le bord périphérique du disque repose sur ladite partie saillante, ledit logement étant divisé en une pluralité de zones de réception d'un disque, chaque zone étant délimitée au moins par deux segments en arc de cercle de deux bords longitudinaux disposés en vis-à-vis, et portant des pattes de soutien du disque correspondant.

Le plateau selon l'invention peut aussi présenter une ou plusieurs des caractéristiques ci-dessous :
- Les moyens de maintien de chaque disque excluent tout moyen complémentaire mettant en oeuvre une rosace centrale.
- Le logement est délimité par un fond plat s'étendant au même niveau dans tout ledit logement.
- La partie saillante de la patte de soutien s'étend à distance au-dessus du fond du logement.
- Les moyens de maintien comprennent deux pattes de soutien disposées sur deux bords opposés du logement délimitant entre eux une zone de réception du disque en position oblique.
- La patte de soutien des moyens de maintien comprend un moyen de retenue du disque en position de stockage oblique, dans une direction perpendiculaire opposée au fond du logement.
- Le moyen de retenue est agencé pour bloquer le disque en position oblique.
- La patte de soutien est agencée pour être flexible vers l'extérieur du logement, et permettre de dégager le bord périphérique du disque par rapport aux moyens de retenue.
- Les moyens de maintien comprennent une patte ou moyen de blocage d'une partie inférieure du bord périphérique du disque suivant une direction au fond du logement.
- Chaque dite zone est agencée de sorte que chaque disque est bloqué en translation sur une direction longitudinale du plateau.
- Les moyens de maintien sont agencés en sorte que, en dehors d'eux, le bord périphérique du disque se trouve libre, et suspendu au-dessus du fond du logement.

La présente invention se rapporte également à un plateau rigide, de forme générale rectangulaire, comprenant des moyens pour maintenir une pluralité de disques numériques dans des positions de stockage respectives, le plateau présentant une face dans laquelle est ménagé un logement de réception des disques, présentant un fond et des bords, lesdits moyens de maintien étant agencés pour maintenir en position oblique, de manière amovible, un disque, ce dernier venant en appui, d'une part contre lesdits moyens en au moins deux points de son bord périphérique espacés l'un de l'autre, et d'autre part contre le fond dudit logement, ledit logement (30) étant divisé en une pluralité de zones de réception d'un disque, chaque zone étant délimitée au moins par deux segments en arc de cercle de deux bords longitudinaux disposés en vis-à-vis, et portant des pattes de soutien (41) du disque (10) correspondant.

Enfin, la présente invention se rapporte à un conditionnement pour une pluralité de disques numériques comprenant un plateau selon l'invention.

D'autres caractéristiques et avantages de l'invention ressortiront clairement de la description qui en est faite ci-dessous, à titre indicatif et nullement limitatif, en référence aux figures annexées, parmi lesquelles :
la figure 1 est une vue en perspective, en position debout ou verticale, et ouverte, d'un conditionnement selon la présente invention,
la figure 2 est une vue en perspective d'un plateau appartenant à un conditionnement selon l'invention, permettant de recevoir deux disques,
la figure 3 est une vue similaire à celle de la figure 1, pour un plateau, apte à recevoir trois disques, et
la figure 4 est une vue en coupe dans un plan longitudinal médian du plateau de la figure 3, considéré suivant l'incidence des flèches IV de la figure 2,
les figures 5 et 6 représentent de manière schématique un disque numérique tel que considéré par la présente invention, la figure 5 étant une vue de la face inférieure du dit disque, et la figure 6 étant une vue partielle en coupe selon la ligne VI-VI de la figure 6,
la figure 7 représente, vue de face, un autre mode de réalisation d'un plateau selon l'invention, permettant de recevoir deux disques 10,
les figures 8 à 10 représentent des vues partielles en coupe, selon respectivement les lignes de coupe VIII-VIII, IX-IX, et X-X du plateau selon figure 7,
la figure 11 représente en perspective un détail du plateau représenté en figure 7,
la figure 12 représente, vue de face, un autre mode de réalisation d'un plateau selon l'invention, permettant de recevoir trois disques 10,
les figures 13 et 14 représentent des vues partielles en coupe, selon respectivement les lignes de coupe XIII-XIII et XIV-XIV, du plateau selon figure 12,
la figure 15 représente en perspective un détail du plateau représenté en figure 12.

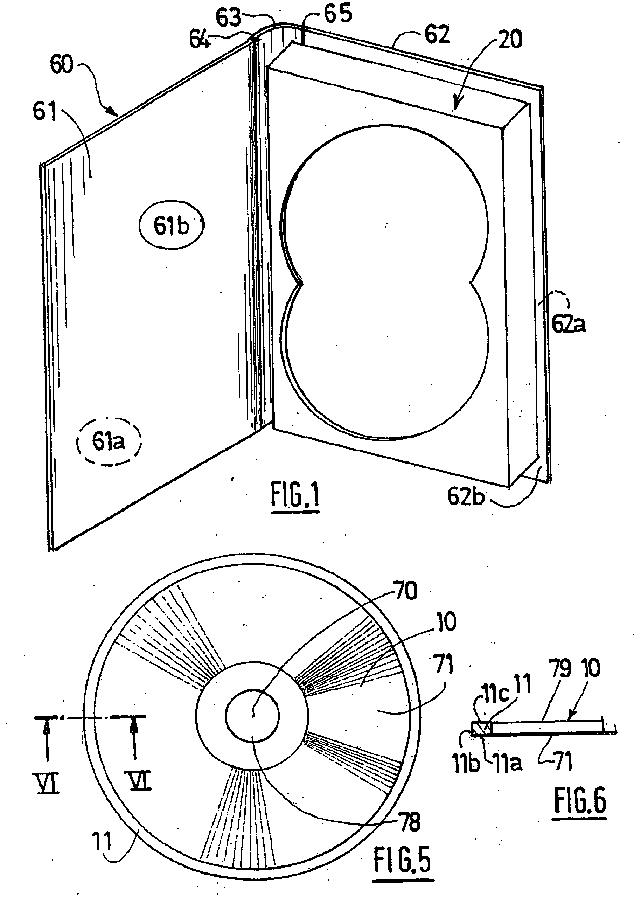

Le conditionnement représenté à la figure 1 est destiné à recevoir, et retenir de manière amovible, une pluralité de disques numériques 10, par exemple des CD audio, des CD vidéo, des DVD, ou des CD Rom. A titre d'exemple, comme montré à la figure 1, il comprend deux parties, à savoir une première partie cartonnée 60, relativement souple ou flexible, en tout cas pliable, ayant généralement la forme de la couverture d'un livre, et une deuxième partie, relativement rigide, en matière plastique, par exemple thermo-formée ou injectée, ayant la forme d'un plateau 20, qui est plus spécifiquement l'objet de la présente invention, et qui est rapportée et fixée à l'intérieur de la couverture cartonnée, par tout moyen approprié, par exemple par collage.

La couverture cartonnée 60 comprend, à la manière d'un livre, un volet supérieur 61 ayant une face extérieure 61a et une face intérieure 61b, un volet inférieur 62 ayant une face extérieure 62a et une face intérieure 62b, et une tranche 63 reliée aux volets 61 et 62, respectivement par des lignes de pliage ou articulation 64 et 65. Par exemple, au moins les faces extérieures 61a et 62a de la couverture 60 peuvent être imprimées ou décorées de manière appropriée.

Le plateau 20, décrit ci-après, a notamment pour fonction de loger et maintenir, mais chacun de manière amovible, la pluralité des disques numériques 10. Il est rapporté et fixé à l'intérieur de la couverture 60, par exemple sur la face intérieure 62b du volet inférieur 62, par tout moyen approprié, par exemple par collage. Une foie le volet 61 rabattu sur le plateau 10, l'ensemble couverture 60/plateau 10 prend la forme d'un livre, pouvant être stocké, par exemple verticalement, sur un rayonnage.

Il doit être entendu que le conditionnement décrit précédemment n'est qu'un mode parmi d'autres pour emballer ou protéger le plateau 20, ce dernier pouvant appartenir à d'autres formes de conditionnement, en particulier pour protéger et contenir un ou plusieurs plateaux.

Aux fins de la compréhension de la présente Invention, il est rappelé qu'un disque numérique comprend, de manière générale, par référence aux figures 5 et 6 :
- une face supérieure 79, en général inactive, servant par exemple de support à une impression ou un décor,
- une face inférieure comportant une couronne 71 active, au sens où des signaux numériques sont enregistrés sur cette face inférieure,
- le disque comportant un perçage axial 78 de centre 70, pour le passage engagé de tout moyen d'entraînement en rotation,
- et un bord périphérique 11, inactif (car ne comportant pas d'information numérique), et limité en extension radiale sur les faces supérieure et inférieure, et ménageant de ce fait, comme montré à la figure 6 plus particulièrement, une bordure inférieure 11a, un chanfrein ou tranche 11b, et une bordure supérieure 11c.

Comme décrit et défini ci-après, la présente invention s'intéresse à un maintien d'un disque numérique 10, par tout ou partie de son bord périphérique, en ménageant la couronne active inférieure 71, et préférentiellement sans maintien complémentaire, grâce au passage d'une rosace centrale dans le perçage axial 78.

Le plateau 20 présente une forme générale plate, peu épaisse, rectangulaire, et présente une première grande face, ou face supérieure, dans laquelle est ménagé en creux un logement 30 de réception des disques 10, délimité par un fond 31.

Le fond 31 est plat, parallèle à la grande face du plateau, et s'étend au même niveau dans tout le logement 30, en particulier sans étages séparés par une marche.

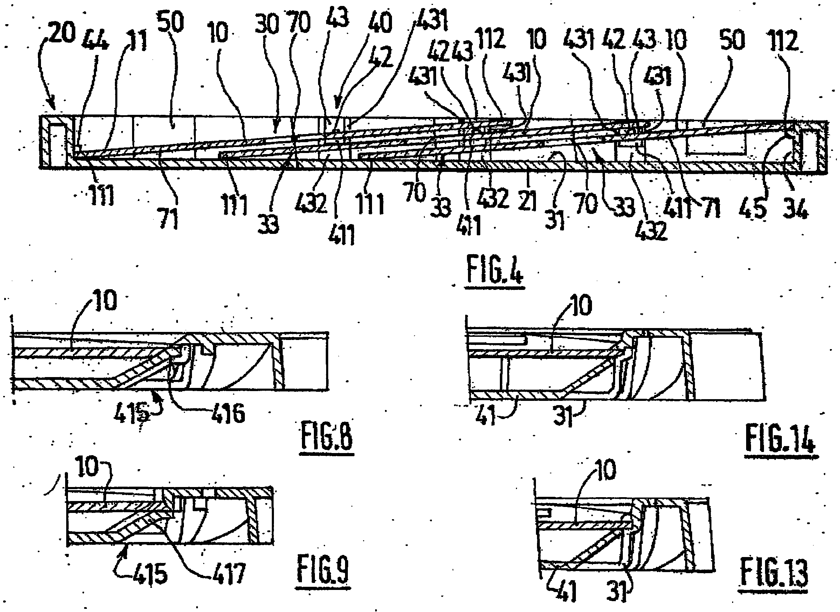

Comme on le voit sur la figure 4, le plateau 20 comprend un voile plat 21 dont la face intérieure au logement 30 définit le fond 31 et dont une face extérieure définit une seconde grande face, ou face inférieure, du plateau, opposée à la première.

Le plateau 20 comprend des moyens 40 pour maintenir, mais de manière amovible, les disques 10, dans des positions de stockage respectives, à l'intérieur du logement 30, dans lesquelles les disques 10 s'étendent parallèlement et de manière espacée les uns par rapport aux autres, mais de manière décalée les uns par rapport aux autres, selon une même direction d'alignement longitudinal XX' de leurs centres respectifs 70, parallèle à la face intérieure du voile 21, les disques 10 étant disposés dans des plans respectifs obliques par rapport au fond 31.

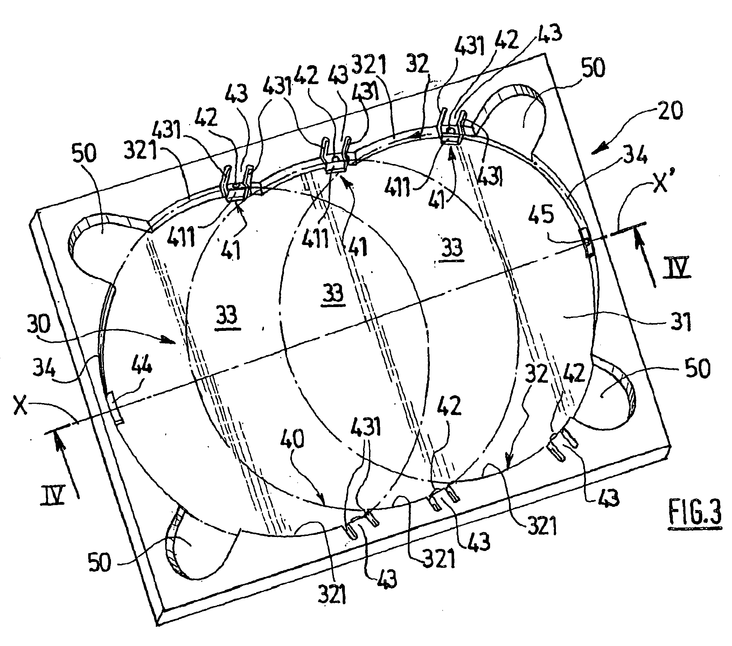

En conséquence, les disques stockés 10 se recouvrent partiellement, comme le montre la figure 3.

Les moyens de maintien 40 décrits ci-après, à titre d'exemple, assurent à eux seuls les fonctions suivantes:
- un maintien amovible de chaque disque 10, l'utilisateur pouvant détacher et extraire du plateau 20, un seul et même disque, sans détacher et extraire au préalable le ou les autres disques,
- un maintien de chaque disque 20, en position oblique, en venant en appui uniquement contre le bord périphérique 11 dudit disque, en au moins deux points supérieurs espacés l'un de l'autre, et en niveau inférieur contre le fond 31 du logement 30,
- et un maintien tel que la face, ou couronne active 71, intérieure, de chaque disque demeure hors de contact avec la face intérieure du logement 30 et/ou la face supérieure du disque 10 immédiatement adjacent et inférieur.

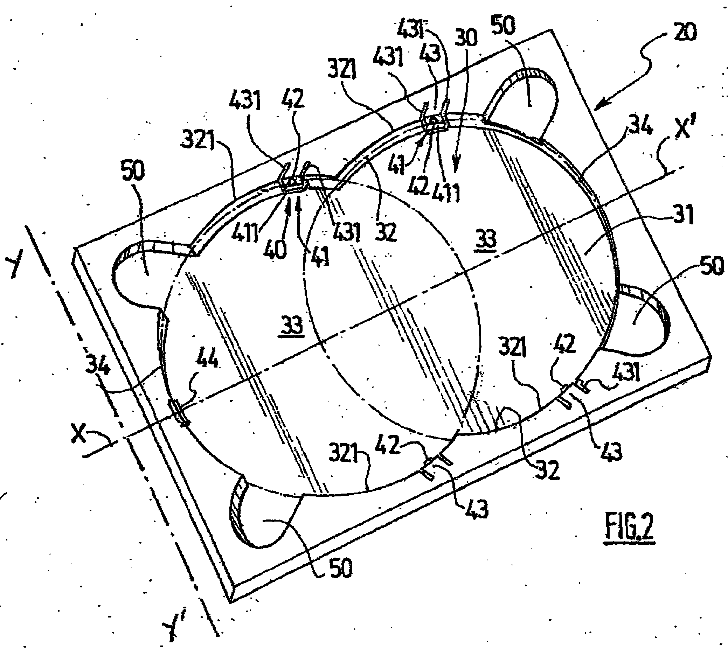

On voit sur les figures 2 et 3 que les disques 10 dans leurs positions de stockage respectives, et en particulier leurs centres 70, sont alignés suivant la direction longitudinale X-X', pour former une rangée.

Les positions de stockage oblique des disques 10 se déduisent ainsi les unes des autres, par translation suivant la direction longitudinale X-X'. Les disques 10 sont de préférence régulièrement espacés suivant la direction longitudinale X-X'.

Comme le montre la figure 4, chaque disque 10 repose sur le fond 31 par une partie inférieure 111 de son bord périphérique 11, et s'étend à partir de ladite partie inférieure 111, vers la droite dans la représentation de la figure 4, et en oblique par rapport une direction perpendiculaire au fond 31, vers l'ouverture du logement 30.

Une partie supérieure 112 du bord périphérique 11 du disque 10 affleure au niveau de l'ouverture du logement 30, dans la première grande face, ou face supérieure, du plateau 20.

L'angle formé par le plan oblique du disque 10 et le fond 31 est fermé, et vaut quelques degrés. Il est généralement compris entre 0 et 10°, et de préférence entre 3 et 6°.

Il varie en fonction de la taille du plateau 20 et du nombre de disques 10 disposés dans le logement 30. Pour un plateau de longueur 19 centimètres suivant la direction longitudinale X-X', de largeur 13,5 centimètres suivant une direction transversale Y-Y' perpendiculaire à la direction longitudinale, et d'épaisseur environ 1 centimètre, pouvant recevoir trois disques 10, l'angle vaut environ 4,5°.

Dans la suite, on convient d'appeler première position la position du disque 10 situé à une première extrémité de la rangée, seconde position la position du disque 10 situé immédiatement à côté de la première position, troisième position la position immédiatement à côté de la seconde en s'éloignant de la première position, et ainsi de suite jusqu'à la seconde extrémité de la rangée opposée à la première extrémité.

Comme on voit sur la figure 4, le disque 10 situé en première position, à l'extrémité gauche sur la figure 4, recouvre partiellement le disque 10 situé en seconde position, ce disque recouvrant lui-méme partiellement le disque situé en troisième position, et ainsi de suite jusqu'au disque occupant la dernière position, qui ne recouvre aucun autre disque.

La proportion du disque 10 recouverte par le disque situé immédiatement avant lui dans la rangée dépend de la taille du plateau 20 et du nombre de disques disposés dans le logement,

Pour un plateau 20 de la taille mentionnée ci-dessus, recevant deux disques 10 comme dans l'exemple de réalisation de la figure 2, le disque situé en première position recouvre le disque situé en seconde position sur environ 50% du diamètre de celui-ci.

Pour un plateau de la taille mentionnée ci-dessus, recevant trois disques comme dans l'exemple de réalisation de la figure 4, le disque situé en première ou seconde position recouvre le disque situé après lui dans la rangée sur environ 75% du diamètre de celui-ci, selon la direction longitudinale X-X'.

Le logement 30 est délimité par deux bords longitudinaux opposés 32 s'étendant suivant des directions générales sensiblement parallèles à la direction longitudinale X-X', et par deux bords transversaux 34 reliant les deux bords longitudinaux 32 à deux extrémité longitudinales opposées du logement 30, ces bords transversaux s'étendant chacun suivant une direction générale transversale, sensiblement parallèle à la direction transversale Y-Y' précitée.

Plus précisément, le logement 30 est divisé en une pluralité de zones de réception 33 aptes à recevoir chacune un disque 10, matérialisé par des traits mixtes sur les figures 2 et 3, chaque zone étant délimitée au moins par deux segments en arc de cercle 321 des deux bords longitudinaux 32 disposés en vis-à-vis.

Comme on le voit nettement sur la figure 3, chaque bord longitudinal 32 est donc divisé en une succession de segments en arc de cercle 321 alignés longitudinalement, chacun de concavité tournée vers l'intérieur du logement 30, deux segments successifs se rejoignant pour former une zone pointue pointant vers l'intérieur du logement 30.

Les deux segments en arc de cercle 321 des deux bords longitudinaux 32 disposés en vis-à-vis délimitant une même zone 33 sont concentriques, et s'inscrivent sur un cercle de rayon très légèrement supérieur à celui d'un disque 10.

Les bords transversaux 34 délimitent les deux zones de réception 33 et sont situés aux deux extrémités du logement 30, et sont conformés chacun en un arc de cercle reliant les deux segments en arc de cercle 321 opposés délimitant la zone 33 correspondante, chaque bord transversal s'inscrivant sur le même cercle que les deux segments 321 correspondants, et présentant donc un rayon très légèrement supérieur au rayon du disque 10 reçu dans sa zone.

On notera que, le disque 10 est bloqué en translation suivant la direction longitudinale par des portions d'extrémités des bords en arc de cercle 321 formant les zones pointues de chaque côté longitudinal dudit diamètre transversal.

Les moyens 40 de maintien, définis précédemment fonctionnellement, d'au moins certains disques 10 comprennent des pattes 41 découpées ou ménagées sur lesdits bords longitudinaux 32, élastiques et flexibles vers le fond 31 du logement 30, et supportant lesdits disques 10 par les bords périphériques 11 respectifs de ceux-ci.

Le disque 10 situé dans une zone de réception 33 donnée est soutenu par deux pattes 41 disposées sur les deux bords en arc de cercle 321 opposés délimitant ladite zone.

Ces pattes 41 comprennent chacune une partie 411 en saillie vers l'intérieur du logement 30 à partir du bord 321, de petite taille relativement au rayon du disque 10 pour que seul le bord périphérique 11 du disque 10, ne portant pas d'information numérique, repose sur la patte 41, à savoir par sa bordure inférieure 11a (cf Fig6).

Le disque 10 en position de stockage repose par la partie inférieure 111 de son bord périphérique 11, et plus précisément par sa tranche 11b, sur le fond 31, et repose par deux autres parties du même bord périphérique, plus précisément de sa bordure inférieure 11a, sur les parties en saillie 411 des deux pattes 41, ces parties en saillies 411 s'étendant à distance au-dessus du fond 31, de telle sorte que le disque 10 est maintenu en oblique.

De préférence, les pattes 41 sont disposées le long des bords longitudinaux 32, de telle sorte qu'elles soutiennent une moitié supérieure du bord périphérique 11 du disque 10, opposée à la partie inférieure 111.

Il est toutefois possible de disposer les pattes 41 pour que celles-ci soutiennent le disque 10 par une moitié inférieure de son bord périphérique 11.

Les moyens de maintien 40 comprennent encore des moyens 42 de retenue des disques 10 en position de stockage, selon une direction perpendiculaire au fond 31, ces moyens étant ménagés sur les bords longitudinaux 32.

Ces moyens de retenue sont typiquement constitués par des ergots 42, appartenant aux pattes 41 respectivement, faisant saillie 411 vers l'intérieur du logement 30 par rapport aux bords longitudinaux 32, et situés immédiatement au-dessus des parties en saillie 411 par rapport au fond 31. Le bord périphérique 11 du disque 10 vient s'engager entre la partie en saillie 411 et l'ergot 42, et est bloqué par cet ergot dans une direction perpendiculaire opposée au fond 31.

Comme on le voit sur les figures 1 et 2, les pattes 41 sont rendues flexibles, grâce à des languettes flexibles 43 respectivement, ménagées dans les bords longitudinaux 32, et portant chacune une partie en saillie 411, et l'ergot 42 correspondant.

Ces languettes 43 sont flexibles vers le bas et vers l'extérieur du logement 30, de telle sorte qu'il est possible d'escamoter les ergots 42 pour dégager le bord périphérique 11 du disque et extraire celui-ci du logement 30.

Ces languettes 43 sont par exemple obtenues en réalisant deux premières fentes parallèles 431 dans les bords longitudinaux 32, selon deux côtés opposés de la partie en saillie 411, et une troisième fente 432 sous la partie en saillie 411, débouchant dans les deux premières fentes 431. On entend par "sous la partie en saillie 411" que la troisième fente s'étend entre le fond 31 et la partie en saillie 411.

Les moyens de maintien 40 comprennent encore, le cas échéant, à une extrémité longitudinale du logement 30 une patte de blocage 44, formant avec le fond 31 une rainure de blocage d'une partie inférieure 111 du bord périphérique 11 du disque 10 occupant la première position, cette patte 44 retenant ledit disque suivant la direction perpendiculaire au fond 31.

Cette patte de blocage 44 est formée au milieu du bord transversal 34 du logement 30, et fait saillie vers l'intérieur du logement 30 par rapport à ce bord; cette patte s'étendant légèrement au-dessus du fond 31, de telle sorte que ladite rainure présente une hauteur légèrement supérieure à l'épaisseur du disque 10.

Enfin, les moyens de maintien 40 comprennent, le cas échéant, (cf Fig.3), une patte centrale 45 ménagée au milieu du bord transversal 34 opposé à la patte de blocage 44, et bordant donc la zone de réception 33 du disque 10 situé en dernière position. Cette patte centrale 45 fait saillie vers l'intérieur du logement 30 par rapport audit bord transversal 34, et soutient le disque 10 occupant la dernière position par une partie supérieure 112 de son bord périphérique 11, opposée au fond 31. La patte centrale 45 est ménagée à distance au-dessus du fond 31.

Cette patte centrale 45 peut remplacer les deux pattes de soutien 41 du disque correspondant, ou venir en plus de ces deux pattes.

Il résulte de la description précédente, donnée à titre d'exemple, que :
a) ce sont les moyens de maintien 40, qui maintiennent et soutiennent chaque disque 10 en position oblique ; en dehors des moyens de maintien en contact éventuellement bloqué, le bord périphérique 11 du disque 14 se trouve libre, et suspendu au-dessus du fond 31 du logement 30,
b) ces moyens de maintien 40, en l'occurrence les pattes 41 et 45, sont régulièrement distribués selon le pourtour circulaire, ou le bord périphérique 11, de chaque disque 10,
c) et au moins deux pattes 41 maintenant la moitié supérieure du bord périphérique 11 du disque 10 comprennent des moyens de retenue 42, par exemple des ergots, permettant le blocage d'un disque 10 en position oblique ; tandis que la flexibilité des mêmes pattes 41 permet d'escamoter les moyens de retenue 42, et de dégager le bord périphérique 11 du disque, pour permettre sa préhension.

Cette dernière caractéristique (c), éventuellement en combinaison avec au moins l'une des caractéristiques (a) et (b), permet d'assurer un stockage des disques 10, en position oblique et superposée, mais espacée, de manière bloquée, tout en permettant de débloquer et extraire indépendamment et aisément chacun d'entre eux, et ce, sans prendre le risque d'endommager la partie active desdits disques.

On notera également que des oreilles 50 de préhension des disques 10 sont creusées dans la première grande face, ou face supérieure, du plateau 30, aux points de jonction des bords longitudinaux et transversaux 32 et 34, et débouchent dans le logement 30.

Le plateau 20 est généralement réalisé en matière plastique, d'une pièce, par injection dans un moule de forme adaptée.

Le conditionnement décrit ci-dessus peut présenter de multiples variantes sans sortir du cadre de l'invention.

Les figures 2 à 4 illustrent deux exemples de réalisation dans lesquels le logement reçoit 2 ou 3 disques 10. Bien entendu, il est possible de prévoir que le logement peut recevoir quatre disques 10, ou plus. Ce nombre est limité par la taille du plateau 20, et par la proportion de recouvrement acceptable entre deux disques voisins.

Cette proportion de recouvrement acceptable est limitée essentiellement par l'exigence selon laquelle il doit être possible de dégager chaque disque 10 indépendamment des autres, c'est-à-dire sans avoir à bouger les autres, ou les extraire du plateau 20.

Il faut pour cela pouvoir soulever chaque disque par la partie supérieure 112 de son bord périphérique 11, jusqu'à ce que son diamètre transversal soit dégagé des bords longitudinaux 32. On peut alors le tirer longitudinalement, dans la direction X-X'. Cette opération doit pouvoir se faire sans que le disque 10 vienne toucher par sa face inférieure 71, la face supérieure 79 du disque 10 qu'il le recouvre partiellement.

On comprend donc bien que si les disques font des angles relativement plus grands par rapport au fond 31, et sont relativement plus espacés les uns des autres, il sera possible de les dégager plus facilement, et on pourra ainsi accepter un taux de recouvrement plus important entre deux disques 10.

Au contraire, si les disques font des angles relativement plus faibles par rapport au fond 31, et sont relativement moins espacés les uns des autres, il sera moins facile de les dégager et le taux de recouvrement entre deux disques devra être plus faible.

Bien entendu, on peut prévoir que les disques 10 font des angles avec le fond 31 différents les uns des autres. De même, l'écartement entre deux disques 10 peut être variable.

Les pattes de soutien 41 des disques peuvent présenter toute forme adaptée. Elles peuvent ne pas être flexibles, mais être par exemple solidaires des bords longitudinaux,

Les ergots ou moyens de retenue 42 peuvent ne pas être montés sur des pattes flexibles 41, mais être solidaires des bords longitudinaux 32, les disques 10 étant dégagés de ces ergots par déformation des ergots eux-mêmes, les ergots étant bien entendu constitués dans ce cas d'un matériau déformable.

Les moyens de maintien 40 peuvent comprendre plusieurs pattes de blocage 44 permettant de maintenir les parties inférieures des bords périphériques de plusieurs disques différents. Ces pattes de blocage peuvent être formées sur le fond 31 et faire saillie par rapport à ce fond pour créer des rainures d'engagement des bords des disques.

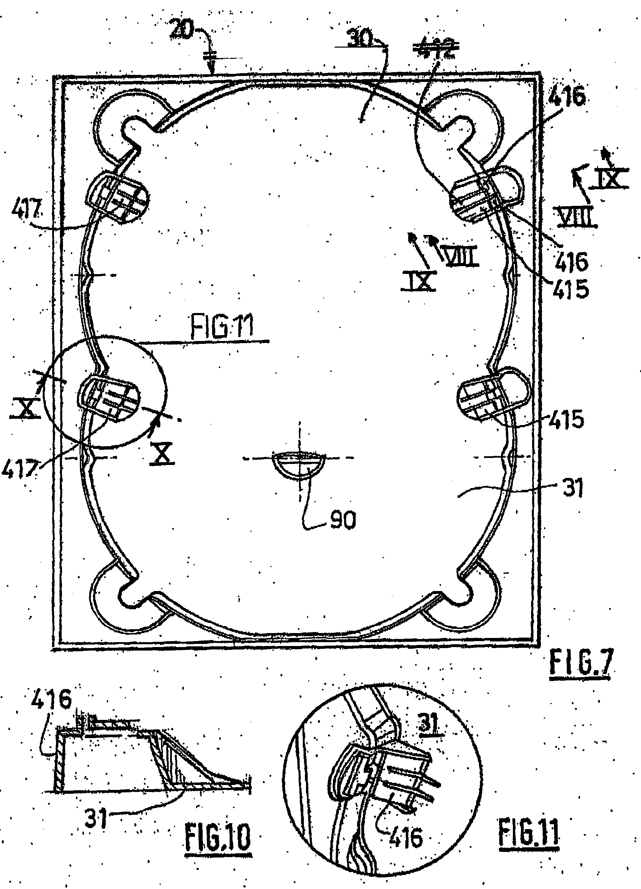

Le mode d'exécution représenté aux figures 7 à 11 diffère de celui décrit par référence aux figures 1 à 4 :
- par l'existence sur le fond 31 d'une butée 90 comportant une rainure non représentée, et adaptée pour recevoir uniquement le bord périphérique 11 de la moitié inférieure d'un disque 10 stocké en position oblique,
- par des pattes de soutien différenciées 416 et 417, et différentes de celles 41 décrites précédemment.
Chaque patte 415 permet l'encliquetage et le maintien de la bordure périphérique du disque 10, par simple poussée de ce dernier vers le fond 31, et la libération de cette même bordure, en fléchissant ladite patte vers le fond 31 et l'extérieur du logement 30, en appuyant sur la partie "push". A cette fin, la patte 416 a une structure composite, mais monobloc, faite de deux épaulements radiaux 416, de part et d'autre d'une lame élastique 417 contre la partie 11a de la bordure périphérique 11 du disque 10.

Chaque patte 417 a une structure similaire aux pattes 41 décrites précédemment.

Les pattes 415 et 417 sont reliées au reste de la structure monobloc du plateau 20, par leurs parties inférieures, flexibles.

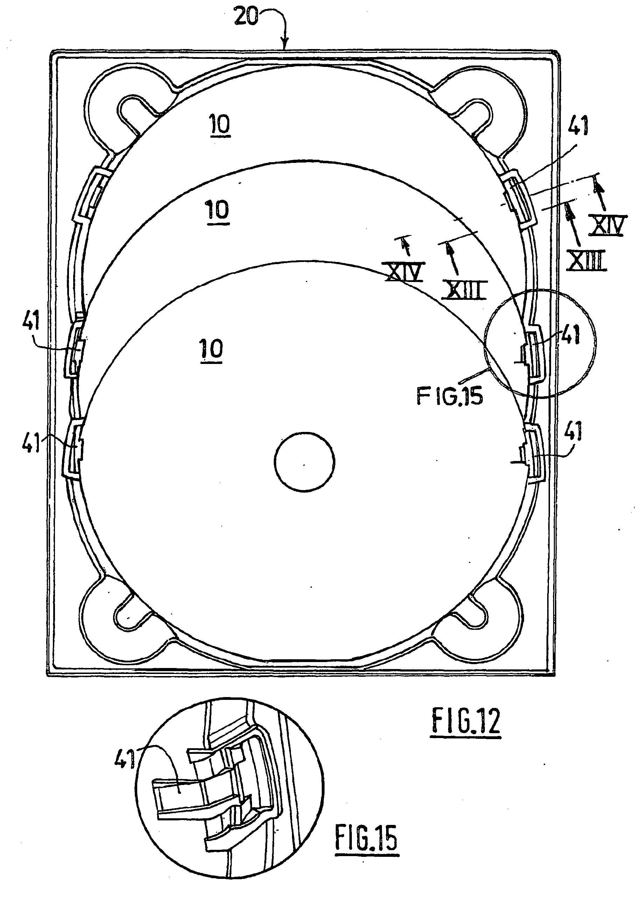

Le mode d'exécution représenté aux figures 12 à 15 permet de stocker trois disques 10, en position oblique, avec des pattes 41 sur le plateau 20, similaires aux pattes 415 particulières, décrites précédemment.

On comprend donc bien que le conditionnement décrit ci-dessus présente de multiples avantages.

Il permet de disposer plusieurs disques dans un même logement, de façon très compacte, chaque disque pouvant être retiré Indépendamment, sans toucher aux autres.

Il est ainsi possible de loger un nombre important de disques, 4 ou plus, dans un même conditionnement sans augmenter fortement l'épaisseur et/ou la longueur de ce conditionnement.

Ce résultat est atteint par des moyens très simples. Il ne met pas en oeuvre de supports pivotants, prévus dans le conditionnement, additionnels, montés sur le plateau 20, supports pivotants qui sont à la fois fragiles et nécessitent des opérations de montage coûteuses. Au contraire, le conditionnement de l'invention est à la fois très économique et très robuste, puisqu'il permet de s'affranchir de tels supports pivotants.

Les disques sont maintenus - par leurs bords périphériques respectifs, de telle sorte que le conditionnement ne met pas en oeuvre de rosaces centrales de fixation des disques. Ceci est un avantage, puisque ces rosaces sont coûteuses et fragiles.

## Revendications

1. Plateau (20), rigide, de forme générale rectangulaire, comprenant des moyens (40) pour maintenir une pluralité de disques numériques (10) dans des positions de stockage respectives, le plateau présentant une face dans laquelle est ménagé un logement (30) de réception des disques (10), présentant un fond (31) et des bords (32, 34), lesdits moyens (40) de maintien étant agencés pour maintenir en position oblique, de manière amovible, chaque disque, et comportent une patte de soutien (41) ménagée sur un dit bord, agencée pour soutenir chaque dit disque en position oblique, et comprenant une partie saillante (411) s'étendant vers l'intérieur du logement (30), dont la taille est choisie pour que le bord périphérique (11) du disque (10) repose sur ladite partie saillante, ledit logement (30) étant divisé en une pluralité de zones (33) de réception d'un disque (10), chaque zone (33) étant délimitée au moins par deux segments en arc de cercle (321) de deux bords longitudinaux (32) disposés en vis-à-vis, et portant des pattes de soutien (41) du disque (10) correspondant.

2. Plateau selon la revendication 1, **caractérisé en ce que** les moyens (40) de maintien de chaque disque excluent tout moyen complémentaire mettant en oeuvre une rosace centrale.

3. Plateau selon la revendication 1, **caractérisé en ce que** le logement (30) est délimité par un fond plat (31), s'étendant au même niveau dans tout ledit Logement.

4. Plateau selon la revendication 1, **caractérisé en ce que** la partie saillante (411) de la patte de soutien (41) s'étend à distance au-dessus du fond (31) du 30 logement (30).

5. Plateau selon la revendication 1, **caractérisé en ce que** les moyens (40) de maintien comprennent deux pattes (41) de soutien disposées sur deux bords (32) opposés du logement (30) délimitant entre eux une zone de réception (33) du disque en position oblique.

6. Plateau selon la revendication 1, **caractérisé en ce que** la patte (41) de soutien des moyens (40) de maintien comprend un moyen (42) de retenue du disque (10) en position de stockage oblique, dans une direction perpendiculaire opposée au fond (31) du logement (30).

7. Plateau selon la revendication 6, **caractérisé en ce que** le moyen (42) de retenue est agencé pour bloquer le disque (10) en position oblique.

8. Plateau selon la revendication 6, **caractérisé en ce que** la patte (41) de soutien est agencée pour être flexible vers l'extérieur du logement (30), et permettre de dégager le bord périphérique (11) du disque (10) par rapport au moyen (42) de retenue.

9. Plateau selon la revendication 1, **caractérisé en ce que** les moyens de maintien (40) comprennent une patte ou moyen de blocage (44) d'une partie inférieure (111) du bord périphérique (11) du disque (10) suivant une direction perpendiculaire au fond (31) du logement (30).

10. Plateau selon la revendication 1, **caractérisé en ce que** chaque dite zone est agencée en sorte que chaque disque (10) est bloqué en translation suivant une direction longitudinale (XX') du plateau (20).

11. Plateau selon la revendication 1, **caractérisé en ce que** les moyens de maintien (40) sont agencés en sorte que, en dehors d'eux, le bord périphérique 11 du disque 10 se trouve libre, et suspendu au-dessus du fond (31) du logement (30).

12. Plateau (20) rigide, de forme générale rectangulaire, comprenant des moyens (40) pour maintenir une pluralité de disques numériques (10) dans des positions de stockage respectives, le plateau présentant une face dans laquelle est ménagé un logement (30) de réception des disques (10), présentant un fond (31) et des bords (32, 34), lesdits moyens (40) de maintien étant agencés pour maintenir en position oblique, de manière amovible, un disque, ce dernier venant en appui, d'une part contre lesdits moyens en au moins deux points de son bord périphérique espacés l'un de l'autre, et d'autre part contre le fond (31) dudit logement, ledit logement (30) étant divisé en une pluralité de zones (33) de réception d'un disque (10), chaque zone (33) étant délimitée au moins par deux segments en arc de cercle (321) de deux bords longitudinaux (32) disposés en vis-à-vis, et portant des pattes de soutien (41) du disque (10) correspondant.

13. Conditionnement pour une pluralité de disques numériques (10), comprenant un plateau (20) selon l'une quelconque des revendications 1 à 12.

## Patentansprüche

1. Starre, allgemein rechteckig geformte Platte (20), Mittel (40) umfassend, um eine Mehrzahl von Digitalscheiben (10) in jeweiligen Lagerstellungen zu halten, wobei die Platte eine Seite aufweist, in die eine Aufnahme (30) zur Ablage der Scheiben (10) eingearbeitet ist, einen Boden (31) und Ränder (32, 34) aufweisend, wobei die besagten Haltemittel (40) derart ausgebildet sind, um jede Scheibe bewegbar in schräger Stellung zu halten, und eine Halteklammer (41) umfassen, die auf einem besagten Rand eingearbeitet ist und derart ausgebildet, um jede besagte Scheibe in schräger Stellung zu halten, und einen hervorspringenden Abschnitt (411) umfasst, der sich in die Aufnahme (30) hinein erstreckt, dessen Größe derart gewählt ist, damit der periphere Rand (11) der Scheibe (10) auf dem besagten hervorspringenden Abschnitt aufliegt, und die besagte Aufnahme (30) in eine Mehrzahl von Zonen (33) zur Aufnahme einer Scheibe (10) unterteilt ist, und jede Zone (33) zumindest von zwei Segmenten in einem Kreisbogen (321) mit zwei Längsrändern (32) begrenzt wird, die gegenüber angeordnet sind, und Halteklammern (41) für die entsprechende Scheibe (10) tragen.

2. Platte nach Anspruch 1, **dadurch gekennzeichnet, dass** die Haltemittel (40) jeder Scheibe jedes zusätzliche Mittel ausschließen, das eine mittige Rosette umsetzt.

3. Platte nach Anspruch 1, **dadurch gekennzeichnet, dass** die Aufnahme (30) von einem flachen Boden (31) begrenzt wird, der sich in der gesamten besagten Aufnahme auf derselben Ebene erstreckt.

4. Platte nach Anspruch 1, **dadurch gekennzeichnet, dass** sich der hervorspringende Abschnitt (411) der Halteklammer (41) beabstandet über dem Boden (31) der Aufnahme (30) erstreckt.

5. Platte nach Anspruch 1, **dadurch gekennzeichnet, dass** die Haltemittel (40) zwei Halteklammern (41) umfassen, die auf zwei gegenüberliegenden Rändern (32) der Aufnahme (30) angeordnet sind und zwischen sich einen Aufnahmebereich (33) der Scheibe in schräger Stellung begrenzen.

6. Platte nach Anspruch 1, **dadurch gekennzeichnet, dass** die Halteklammer (41) der Haltemittel (40) ein Mittel (42) umfasst, um die Scheibe (10) in schräger Lagerstellung zurückzuhalten, in einer senkrechten Richtung gegenüberliegend zum Boden (31) der Aufnahme (30).

7. Platte nach Anspruch 6, **dadurch gekennzeichnet, dass** das Rückhaltemittel (42) ausgebildet ist, um die Scheibe (10) in schräger Stellung zu blockieren.

8. Platte nach Anspruch 6, **dadurch gekennzeichnet, dass** die Halteklammer (41) ausgebildet ist, um nach außerhalb der Aufnahme (30) flexibel zu sein und zu erlauben, den peripheren Rand (11) der Scheibe (10) im Verhältnis zum Rückhaltemittel (42) freizugeben.

9. Platte nach Anspruch 1, **dadurch gekennzeichnet, dass** die Haltemittel (40) eine Klammer oder ein Blockiermittel (44) eines unteren Abschnitts (111) des peripheren Rands (11) der Scheibe (10) in einer Richtung senkrecht zum Boden (31) der Aufnahme (30) umfassen.

10. Platte nach Anspruch 1, **dadurch gekennzeichnet, dass** jede besagte Zone derart ausgebildet ist, dass jede Scheibe (10) in der Verschiebung gemäß einer Längsrichtung (XX') der Platte (20) blockiert ist.

11. Platte nach Anspruch 1, **dadurch gekennzeichnet, dass** die Haltemittel (40) derart ausgebildet sind, dass außerhalb dieser der periphere Rand (11) der Scheibe (10) frei ist und über dem Boden (31) der Aufnahme (30) hängend.

12. Starre, allgemein rechteckig geformte Platte (20), Mittel (40) umfassend, um eine Mehrzahl von Digitalscheiben (10) in jeweiligen Lagerstellungen zu halten, wobei die Platte eine Seite aufweist, in die eine Aufnahme (30) zur Ablage der Scheiben (10) eingearbeitet ist, einen Boden (31) und Ränder (32, 34) aufweisend, wobei die besagten Haltemittel (40) derart ausgebildet sind, um jede Scheibe bewegbar in schräger Stellung zu halten, wobei sich dieser letztere einerseits gegen die besagten Mittel in mindestens zwei Punkten ihres peripheren Rands, die voneinander beabstandet sind, abstützt, und andererseits gegen den Boden (31) der besagten Aufnahme, und die besagte Aufnahme (30) in eine Mehrzahl von Zonen (33) zur Aufnahme einer Scheibe (10) unterteilt wird, und jede Zone (33) zumindest von zwei Segmenten in einem Kreisbogen (321) mit zwei Längsrändern (32) begrenzt wird, die gegenüber angeordnet sind, und Halteklammern (41) für die entsprechende Scheibe (10) tragen.

13. Hülle für eine Mehrzahl von Digitalscheiben (10), eine Platte (20) nach irgendeinem der Ansprüche 1 bis 12 umfassend.

## Claims

1. A rigid tray (20), with a general rectangular shape, comprising means (40) for holding a plurality of digital disks (10) in respective storage positions, the tray having a surface in which a housing (30) is provided for receiving the disks (10), having a bottom (31) and edges (32, 34), said holding means (40) being laid out so as to removably hold each disk in an oblique position, and include a supporting tab (41) provided on a so-called edge, laid out in order to support each said disk in an oblique position, and comprising a protruding portion (411) extending towards the inside of the housing (30), the size of which is selected so that the peripheral edge (11) of the disk (10) rests on said protruding portion, said housing (30) being divided into a plurality of areas (33) for receiving a disk (10), each area (33) being delimited by at least two semi-circular segments (321) of the two longitudinal edges (32) disposed facing one other, and carrying supporting tabs (41) of the corresponding disk (10).

2. The tray according to claim 1, **characterized in that** the means (40) for holding each disk exclude any complementary means applying a central rosette.

3. The tray according to claim 1, **characterized in that** the housing (30) is delimited by a flat bottom (31), extending at the same level in the whole of said housing.

4. The tray according to claim 1, **characterized in that** the protruding portion (411) of the supporting tab (41) extends at a distance above the bottom (31) of the housing (30).

5. The tray according to claim 1, **characterized in that** the holding means (40) comprise two supporting tabs (41) disposed on two opposite edges (32) of the housing (30) delimiting between them an area (33) for receiving the disk in an oblique position.

6. The tray according to claim 1, **characterized in that** the tab (41) for supporting the holding means (40) comprises a means (42) for retaining the disk (10) in an oblique storage position, in a perpendicular direction opposite to the bottom (31) of the housing (30),

7. The tray according to claim 6, **characterized in that** the retaining means (42) is laid out in order to block the disk (10) in an oblique position.

8. The tray according to claim 6, **characterized in that** the supporting tab (41) is laid out so as to be flexible towards the outside of the housing (30), and so that the peripheral edge (11) of the disk (10) may be cleared relatively to the retaining means (42).

9. The tray according to claim 1, **characterized in that** the holding means (40) comprise a tab or means (44) for blocking a lower portion (111) of the peripheral edge (11) of the disk (10) along a direction perpendicular to the bottom (31) of the housing (30).

10. The tray according to claim 1, **characterized in that** each said area is laid out so that each disk (10) is translationally blocked along a longitudinal direction (XX') of the tray (20).

11. The tray according to claim 1, **characterized in that** the holding means (40) are laid out so that, apart from them, the peripheral edge (11) of the disk (10) is free and suspended above the bottom (31) of the housing (30).

12. A rigid tray (20), with a general rectangular shape, comprising means (40) for holding a plurality of digital disks (10) in respective storage positions, the tray having a face in which a housing (30) for receiving the disks (10) is provided, having a bottom (31) and edges (32, 34), said holding means (40) being laid out so as to removably hold a disk in an oblique position, the latter pressing pressing against said means in at least two points of its peripheral edge spaced apart from each other on the one hand,, and against the bottom (31) of said housing on the other hand, said housing (30) being divided into a plurality of areas (33) for receiving a disk (10), each area (33) being delimited by at least two semi-circular segments (321) with two longitudinal edges (32) disposed facing one another, and carrying supporting tabs (41) of the corresponding disk (10).

13. A packaging for a plurality of digital disks (10), comprising a tray (20) according to any one of claims 1 to 12.
